Europäisches Patentamt

European Patent Office

Office européen des brevets

(11) Publication number: **0 298 674**
**A2**

## (12) EUROPEAN PATENT APPLICATION

(21) Application number: **88306061.8**

(22) Date of filing: **04.07.88**

(51) Int. Cl.⁴: **H04Q 7/02**

(30) Priority: **07.07.87 GB 8715918**

(43) Date of publication of application:
**11.01.89 Bulletin 89/02**

(84) Designated Contracting States:
**AT BE CH DE ES FR GB GR IT LI LU NL SE**

(71) Applicant: **LIBERA DEVELOPMENTS LIMITED**
**Meon House 9 High Street**
**Fareham Hampshire PO16 7AN(GB)**

(72) Inventor: **Crisp Malcolm John**
**9 High Street**
**Fareham Hampshire PO16 7AN(GB)**
Inventor: **Bud Andrew Maurice Gordon**
**9 High Street**
**Fareham Hampshire PO16 7AN(GB)**

(74) Representative: **Morton, Colin David et al**
**Keith W Nash & Co. Pearl Assurance House**
**90-92 Regent Street**
**Cambridge CB2 1DP(GB)**

(54) **Digital Communication Systems.**

(57) A digital communication system comprises receiving and transmitting apparatus at each end of a communication link. A call is set up from either end of the link by first transmitting a paging signal to initiate the link and to identify the address of the intended recipient equipment. A paging signal has a unique carrier modulation envelope and comprises packets of data interleaved with periods of unmodulated carrier such that the presence of the paging signal may be identified by a suitable modulation envelope detector (22, 24, 26) without recourse to decoding the data contained within the paging signal.

FULL COMMS.: DUPLEX TRANSMISSION OF 67 BIT BURSTS

HANDSET

HANDSET SYNCHRONISES TRANSMIT/RECEIVE TO INTERLEAVE WITH BASE

BASE

BASE TRANSMITS/RECEIVES IN TIME DIVISION DUPLEX

*Fig. 1*

## Digital Communication Systems

### Field of the invention

This invention relates to digital communication systems.

### Background to the invention

Several classes of radio communication systems have access to a number of radio frequency channels and automatically select one particular channel for the duration of the message communication. The channel allocation technique is referred to as dynamic channel assignment.

In one such class of system the receiving equipment has no prior knowledge of which channel the transmitting equipment may select at the start of the call. In such systems the receiving equipment continuously or periodically scans all of the channels searching for a call-set up signal addressed to the particular receiver. This call set up signal is termed the paging signal.

In order to determine the destination address contained within such a call set-up signal the receiver must dwell on each channel long enough first to determine that there is a valid paging signal present and then to decode the address information transmitted. In circumstances where the channels may be occupied by existing calls in progress, or by interference signals, the scanning receiver may be caused to dwell unnecessarily on channels to carry out this signal analysis. This increases the time required to scan all of the channels and thus increases the latency of the system. Techniques have been proposed which attempt to delineate the paging signal under these circumstances by detecting the transition from "channel free" to "channel busy" on successive scans of the frequency channels (e.g. US Patent 4,597,104) but such techniques are subject to interference because the received signal level over a radio path is subject to rapid changes in amplitude due to multipath propagation. These fluctuations can corrupt the "free"-"busy" decision process.

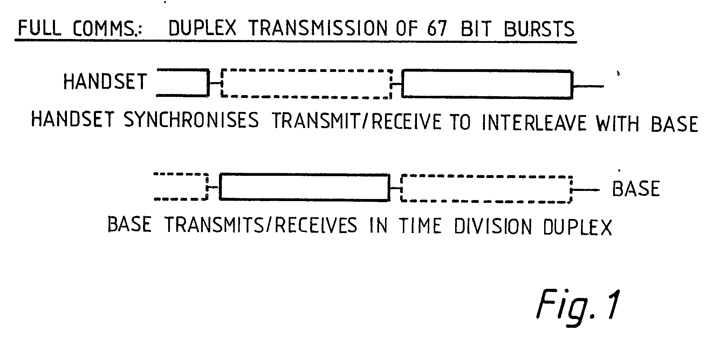

A second problem relates to call set-up in a new class of radio communication system employing time division duplex (TDD) transmission. In such a system the same radio frequency channel is employed for transmission in both directions over the radio link. This is achieved by transmitting blocks of data in one direction over the link, interleaved with blocks of data transmitted in the reverse direction (Figure 1). In such a system it is necessary to establish time synchronism between the two sets of terminal equipment. It is thus necessary for the paging signal to provide the necessary time synchronisation information.

A third problem relates to a TDD system as above in which one set of terminal equipment, normally the base terminal comprises a number of co-located radio transceivers such that the base terminal is capable of simultaneously handling a number of communication channels. In order to avoid interference between the individual transceivers they are normally operated synchronously such that they transmit simultaneously and receive simultaneously. Thus, in the call set set-up mode, each receiver is only able to receive during the receive frame of the TDD format. Since there is initially no time synchronism between the two ends of the communication link it is necessary to ensure that the paging signal from a remote transmitter can be detected successfully by the asynchronous receiver which has only a fifty per cent cycle.

An aim of the invention is to define a unique form of paging signal transmitted for call set-up which solves the above problems. The paging signal can be rapidly delineated from a wide variety of other signal formats and interference, and enables rapid acquisition of time synchronism and page address decoding.

### Summary of the invention

According to the invention there is provided a digital communication system comprising receiving and transmitting apparatus at each end of a communication link and in which a call is set up from either end of the link by first transmitting a paging signal to initiate the link and to identify the address of the intended recipient equipment, characterised by the use of a paging signal which has a carrier modulation envelope comprising packets of data interleaved with periods · of unmodulated carrier such that the presence of the paging signal can be identified by a modulation envelope detector without recourse to decoding the data contained within the paging signal.

In the preferred embodiment the paging signal comprises packets of data transmitted by frequency modulation or phase modulation of a radio carrier, interleaved with periods of unmodulated carrier. The paging signal is characterised by specific preset time periods for the modulated and unmodulated carrier states. The resulting carrier modulation envelope may be uniquely and rapidly identified without the need to analyse the transmitted data. With the proposed modulation envelope the paging signal can be uniquely identified after one signal frame of modulated plus unmodulated carrier. Detection of this unique modulation envelope during the receiver channel scanning process triggers the receiver to dwell on the frequency channel and subsequently to decode the data within the paging signal. This data comprises the identification of the call destination equipment together with time synchronisation data and other messages that may be required for system command and control. The paging signal format thus provides four categories of information simultaneously:

- rapid identification of a unique carrier modulation envelope
- bit synchronisation
- frame synchronisation
- call recipient address data.

A digital communication system according to the invention will now be described by way of example with reference to the accompanying drawings in which:

Figure 1 shows interleaving blocks of data transmitted in the two directions,

Figure 2 shows a paging signal,

Figure 3 shows how one block of the paging signal is received during a receive phase, and

Figure 4 is a block circuit diagram of the communication system

The paging signal will be described in relation to the specific application to a time division duplex (TDD) radio communication system, as employed in a cordless telephone system.

The basic communication system comprises a fixed radio base terminal (BT) and a portable radio handset (HS) each of which has access to a number of radio channels allocated to the communication service. In the time division duplex system the same radio frequency channel is used for communication in both directions over the radio link by interleaving blocks of data transmitted in each direction over the link as shown in Figure 1. Each block comprises 67 bits and the blocks are separated by a guard band of 5 bits duration giving a total frame duration equivalent to 72 bit periods. This is termed the communication frame.

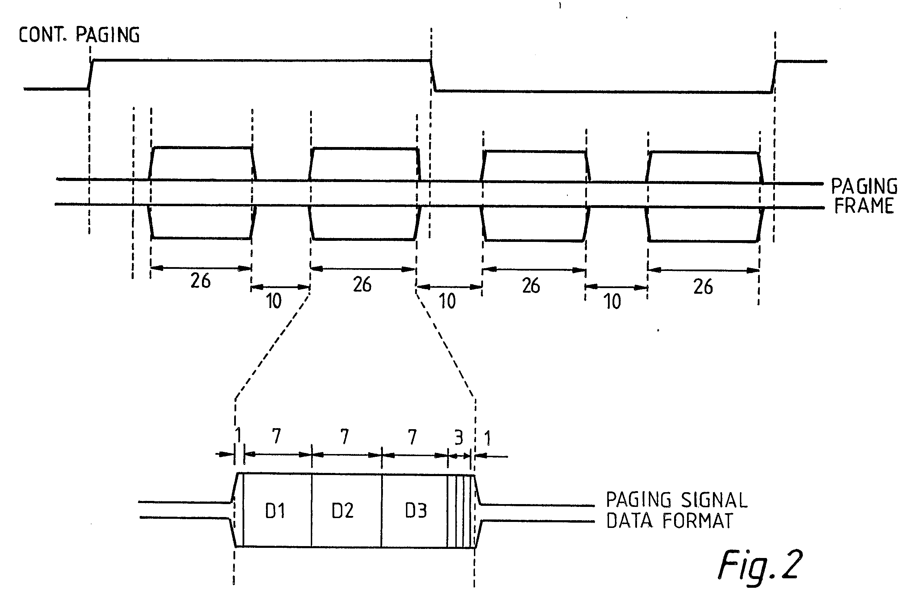

The corresponding paging signal is shown in Figure 2 and comprises blocks of 26 data bits separated by periods of unmodulated carrier of 10 bits duration.

Each 26 bit paging block contains 3 message bits. The binary states of each message bit are transmitted as two complementary 7 bit spreading codes (Figure 2). A family of codes known as Barker Words is used in one 7 bit code and logic state 1 is represented by the complement of this code. The complete 26 bit block also contains 3 parity bits and 2 dummy bits.

Each 26 bit data block is transmitted four times sequentially. A quad of data blocks plus the interleaving unmodulated periods of 10 bit duration make up a frame of 144 bits duration. This is termed the paging frame. Thus the paging frame is twice as long as the communication frame.

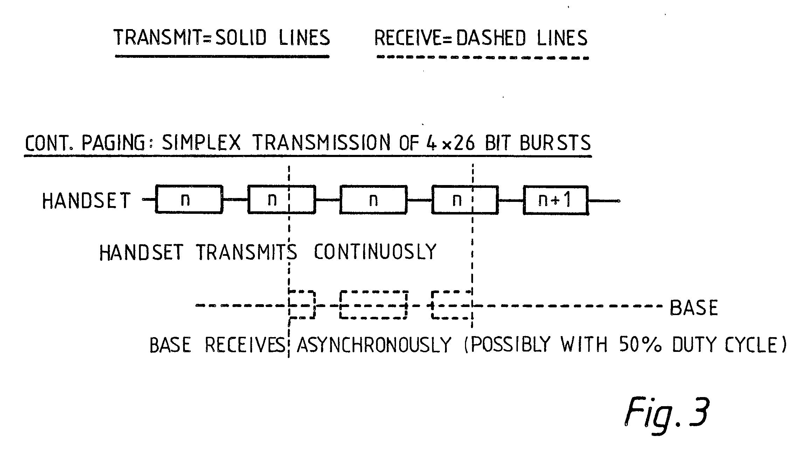

At the start of a call set-up transmission the terminals at each end of the radio link are not in time synchronism, thus the paging frame may be phase-offset from the communication frame. It should be noted that by configuring the paging signal as quad groups of data blocks this ensures that at least one block can be received, uncorrupted, during the receive phase of the communication frame. This situation is illustrated in Figure 3.

System Hardware

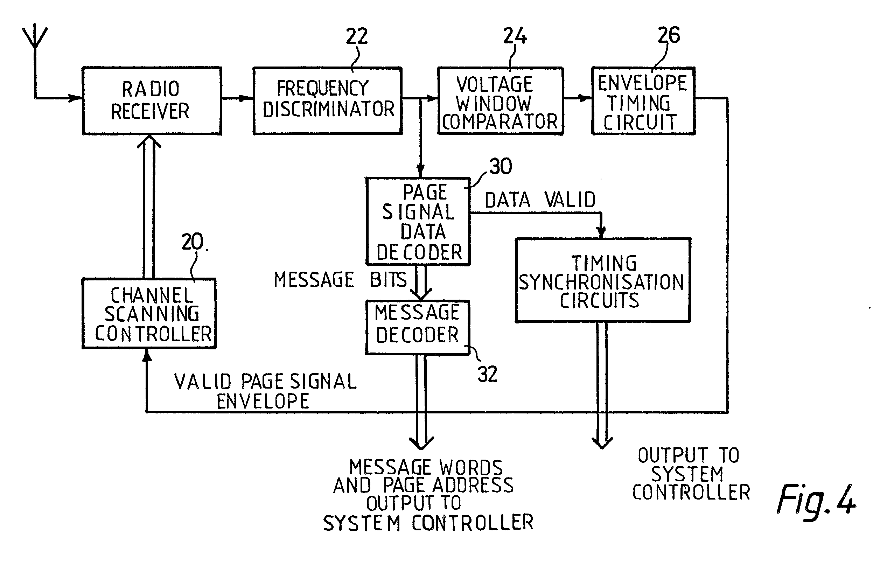

The receiver is a conventional FM receiver modified to incorporate a channel frequency scanner, a page envelope detector, a data decoder, and a message decoder, as shown in Figure 4.

The channel frequency scanner 20 is a multi-channel frequency synthesiser under the control of a microprocessor, which provides continuous scanning of the channels in the standby receive mode.

The page envelope detector comprises an FM discriminator 22 whose voltage output is proportional to carrier frequency deviation connected to a voltage magnitude comparator circuit 24 configured to provide a two-state logic output in accordance with whether the received carrier is modulated with data or is unmodulated. The logic output from the magnitude comparator 24 is couple to a timing circuit 26 which measures the duration of each of these two logic states. The timing circuit 26 is set to provide a logic state output when the two durations of the two logic states correspond to preset values for the modulated and unmodulated carrier periods of the paging signal.

The data decoder 30 comprises a bit clock recovery circuit and Barker Word detector. Bit clock is recovered directly from the input data packet using conventional clock recovery techniques and the Barker Words are detected using preset word correlators.

The message decoder 32 comprises a microprocessor programmed to analyse the groups of 3 message bits from the data decoder and to assemble the bits from successive paging signal data packets to form message words. These message words contain the address identification of the call recipient equipment.

## System Operation

The above circuits operate sequentially and provide the following functions.

## Page Envelope Detect

The output from the page envelope detector indicates the presence of a valid paging signal frame. This is achieved within the period equivalent to one half of a communication frame. This triggers the radio receiver to dwell on the frequency channel and to analyse the paging signal data.

## Data Decoder

The decoder acquires bit synchronisation and detects the presence of valid Barker Words within the 26 bit data blocks.

On detection of all 3 Barker words within one data block, the decoder outputs a data valid signal which indicates successful reception of all three message data bits. The detection of the 26 bit block also provides accurate timing of the phase of the received paging signal, which enables immediate acquisition of paging signal frame synchronisation.

A second output from the decoder corresponds to the logic status of each of the 3 message bits.

## Message Decoder

The message decoder compiles the message bits from successive data blocks and decodes the paging address and the other command and control messages contained therein.

On receipt of its own paging address the receiving equipment initiates transmission of an acknowledgement signal and the communication link subsequently advances to the full communication status.

If the paging address does not correlate then the received signal is not acknowledged, and the receiver reverts to the channel scanning mode.

## Claims

1. A digital communication system comprising receiving and transmitting apparatus at each end of a communication link and in which a call is set up from either end of the link by first transmitting a paging signal to initiate the link and to identify the address of the intended recipient equipment, characterised by the use of a paging signal which has a carrier modulation envelope comprising packets of data interleaved with periods of unmodulated carrier such that the presence of the paging signal can be identified by a modulation envelope detector without recourse to decoding the data contained within the paging signal.

2. A digital communication system according to claim 1, wherein each data packet contains message bits such that the message bits from successive data packets combine to form message words.

3. A digital communication system according to claim 1 or 2, wherein at least one of the message words formed from successive data packets comprises the address identification of the recipient equipment.

4. A digital communication system according to any of the preceding claims, wherein the message bits are encoded using a spreading code with low cross-correlation characteristics, such that the correlation peak of the code is used to determine phase synchronisation of the complete data packet.

5. A digital communication system comprising a radio receiver equipped to continuously or periodically scan radio channels in order to detect an incoming call, and to discriminate paging signals addressed to itself from those addressed to other equipment or from interference signals from other systems, characterised by having the following features:

a) a page envelope detector which identifies periods of modulated and unmodulated received signal carrier and compares the duration of these periods with preset values correspondingg to the valid page signal format,

b) a channel frequency scanner which is triggered to halt scanning and dwell on a given channel frequency, when the page envelope detector signals the identification of a valid paging signal,

c) a data decoder which extracts message data from the paging signal and which simultaneously determines phase synchronism of the paging signal by auto-correlation of the spreading code used to encode the message bits, and

d) a message decoder which compiles the message bits from successive paging signal data packets into message words and determines whether these words contain the address code of the receiving equipment.

FULL COMMS.: DUPLEX TRANSMISSION OF 67 BIT BURSTS

HANDSET

HANDSET SYNCHRONISES TRANSMIT/RECEIVE TO INTERLEAVE WITH BASE

BASE

BASE TRANSMITS/RECEIVES IN TIME DIVISION DUPLEX

*Fig.1*

EP 0 298 674 A2

CONT. PAGING

PAGING FRAME

26  10  26  10  26  10  26

PAGING SIGNAL DATA FORMAT

1  3  7  7  7  1

D3  D2  D1

*Fig.2*

TRANSMIT= SOLID LINES    RECEIVE= DASHED LINES

CONT. PAGING: SIMPLEX TRANSMISSION OF 4×26 BIT BURSTS

HANDSET ─[ n ]─[ n ]─[ n ]─[ n ]─[ n+1 ]─

HANDSET TRANSMITS CONTINUOSLY

BASE

BASE RECEIVES ASYNCHRONOUSLY (POSSIBLY WITH 50% DUTY CYCLE)

*Fig.3*

EP 0 298 674 A2

Fig.4

EP 0 298 674 A2